# EUROPEAN PATENT SPECIFICATION

(11) **EP 2 733 775 B1**
(45) Date of publication and mention of the grant of the patent: **04.10.2017**
(21) Application number: 12820060.7
(22) Date of filing: 01.08.2012
(51) Int. Cl.: H01M 2/34, H01M 2/02, H01M 2/04, H01M 10/04, H01M 10/42, H01M 2/10

(54) **SECONDARY BATTERY PACK**
SEKUNDÄRBATTERIEPACKUNG
BLOC D'ÉLÉMENTS SECONDAIRE

(30) Priority: 04.08.2011 KR 20110077903; 14.02.2012 KR 20120014783
(43) Date of publication of application: 21.05.2014
(73) Proprietor: LG Chem, Ltd., Yeongdeungpo-gu Seoul 150-721 (KR)
(72) Inventor: CHOI, Jong Woon, Daejon 305-380 (KR); YUN, Hyung Ku, Daejeon 305-380 (KR); BAEK, Ju Hwan, Daejon 305-380 (KR); KIM, Tae Wook, Daejon 305-380 (KR)
(74) Representative: Cabinet Plasseraud
(86) International application number: PCT/KR2012/006117
(87) International publication number: WO 2013/019067

(56) References cited:
- KR-A- 20110 066 774
- KR-A- 20110 066 774
- KR-A- 20110 082 747
- KR-B1- 100 889 624
- KR-B1- 100 943 579
- US-A1- 2005 181 242

## Description

### [TECHNICAL FIELD]

The present invention relates to a secondary battery pack.

### [BACKGROUND ART]

As mobile devices have been increasingly developed, and the demand for such mobile devices has increased, the demand for secondary batteries has also sharply increased. Among such secondary batteries is a lithium secondary battery exhibiting high energy density and operating voltage and excellent preservation and service-life characteristics, which has been widely used as an energy source for various electronic products as well as various kinds of mobile devices.

Depending upon kinds of devices in which secondary batteries are used, the secondary batteries may be configured to have a detachable type structure in which the secondary batteries can be easily inserted into and removed from external devices or to have an embedded type structure in which the secondary batteries are embedded in the devices. For example, secondary batteries used in the conventional mobile devices are configured to have a detachable type structure in which it is possible for a user to insert or remove a battery into or from each device. On the other hand, secondary batteries used in devices, such as some mobile phones, tablet PCs, and smart pads, may be configured to have an embedded type structure.

Lithium secondary batteries are widely used as such secondary batteries. Each of the secondary batteries includes an anode terminal and a cathode terminal electrically connected to a device, in which the secondary battery is mounted, and a safety element to effectively control an abnormal state, such as overcharge or overcurrent, of the secondary battery. Examples of the safety element may include a positive temperature coefficient (PTC) element, a protection circuit module (PCM), a fuse, and a thermal cutoff (TCO) element.

Generally, a safety element, such as a PCM, is connected to a battery cell, including an anode terminal and a cathode terminal, via a conductive nickel plates by welding or soldering. For example, the nickel plates are connected to the electrode terminals of the battery cell by welding or soldering, a protection circuit board (PCB) is attached to one side of a double-sided tape, a protective tape is attached to the other side of the double-sided tape, and electrode tabs of the PCB and the nickel plates are connected to each other by welding in a state in which the PCB is in tight contact with the battery cell. In this way, the PCM is connected to the battery cell to manufacture a battery pack.

It is required for the PCM to be maintained in electrical connection with the electrode terminals of the battery cell and, at the same time, to be electrically isolated from other parts of the battery cell. To this end, insulative tapes are attached to various members, including the PCM. In addition, a sealed portion of a battery case is partially bent, and an insulative tape is attached thereon or a barcode is printed thereon. That is, the process is very complicated.

Since a plurality of insulative tapes or parts is required to achieve safe connection between the safety element and the battery cell as described above, a battery pack assembly process is complicated, and manufacturing cost is increased. Also, when external impact is applied to a battery pack, the PCM may be damaged or dimensional stability may be greatly lowered due to the use of the insulative tapes, which exhibit low mechanical strength.

KR20110066774 and US2005/181242 disclose a battery pack comprising PCM

### [DISCLOSURE]

### [TECHNICAL PROBLEM]

It is an object of the present invention to provide a secondary battery pack that is capable of covering a protection circuit board of a secondary battery cell using an electrically insulative case, thereby protecting the protection circuit board from external impact, insulating the protection circuit board, and preventing electrode terminals of the secondary battery cell from being exposed outside.

It is another object of the present invention to provide a secondary battery pack that is capable of reducing the number of parts necessary to constitute the battery pack, thereby simplify an assembly process and exhibiting excellent structural stability.

It is another object of the present invention to provide a secondary battery pack configured to have a structure in which a protection circuit module including a protection circuit board and a case, in which the protection circuit board is disposed, is mounted to an outer circumference of a battery cell, thereby providing maximum capacity in the same standard.

It is a further object of the present invention to provide a protection circuit module that is capable of a protection circuit module that is capable of protecting a safety element from external impact, exhibiting dimensional stability, and preventing wrinkles from being formed at an outer face of a battery pack.

### [TECHNICAL SOLUTION]

A secondary battery pack according to an embodiment of the present invention includes a battery cell having a cathode terminal and an anode terminal formed at one face having a sealed surplus portion and a protection circuit module (PCM) electrically connected to the battery cell via the cathode terminal and the anode terminal.

In this embodiment, the PCM includes a board having a cathode terminal connection part connected to the cathode terminal and an anode terminal connection part connected to the anode terminal, and a first case and a second case each having an open face, the first case and the second case being coupled to each other so that the open faces of the first case and the second case are opposite to each other, the board being disposed in a space defined in the first case and the second case through the open faces.

In this embodiment, the first case and the second case, in which the board is disposed, are mounted to the sealed surplus portion of the battery cell by bending the electrode terminals.

In this embodiment, the first case and the second case may be coupled to each other through an assembly type fastening structure in a state in which the open faces of the first case and the second case are opposite to each other.

In this embodiment, the anode terminal connection part of the PCM is connected to the anode terminal of the battery cell via a safety element. The safety element may be a first safety element or a second safety element.

In this embodiment, the first safety element may be a protection circuit.

In this embodiment, the second safety element may be a positive temperature coefficient (PTC) element, a fuse, or a thermal cutoff (TCO) element.

In this embodiment, the first case may be provided with at least one fastening groove or fastening protrusion for coupling with the second case, and the second case may be provided with at least one fastening protrusion or fastening groove corresponding to the at least one fastening groove or fastening protrusion of the first case. The at least one fastening groove and the at least one fastening protrusion corresponding to the at least one fastening groove may include one or more fastening grooves and one or more fastening protrusions formed at outer circumferences of the opposite faces of the first case and the second case.

In this embodiment, the battery cell may be a plate-shaped battery cell, and the anode terminal and the cathode terminal may be plate-shaped conductive members.

In this embodiment, the first case or the second case is provided with an opening, through which the safety element located in the PCM is exposed outside.

In this embodiment, the board may further include an external input and output terminal.

In this embodiment, the external input and output terminal may be formed on the board at which the anode terminal connection part and the cathode terminal connection part are formed.

In this embodiment, the external input and output terminal may be formed at the other face of the board at which the anode terminal connection part and the cathode terminal connection part are formed.

In this embodiment, the external input and output terminal may be formed at the board at which the anode terminal connection part and the cathode terminal connection part are formed via an interconnection part.

Also, the first case and/or the second case may include grooves, into which the electrode terminals of the battery cell are inserted, and a groove, in which the external input and output terminal is mounted in a state in which the external input and output terminal extends outside.

In this embodiment, the secondary battery pack may further include an insulative tape additionally attached to at least one of outer faces of the first case and/or the second case.

In this embodiment, the battery cell may be configured to have a structure in which an electrode assembly, including cathodes, anodes, and separators respectively disposed between the cathodes and the anodes, is disposed in a battery case made of a laminate sheet including a metal layer and a resin layer in a sealed state.

In this embodiment, the secondary battery pack may further include a nickel plate additionally mounted to the cathode terminal connection part and/or the anode terminal connection part of the board by ultrasonic welding.

In this embodiment, the secondary battery pack may further include a label to cover the battery cell. The label may be configured to have a structure to cover sealed outer circumferences of the battery cell and the PCM.

Also, the label may be configured to have a sheet structure including a first attachment face to cover a bottom, which is one of opposite major faces, of the battery cell, second and third attachment faces extending from the first attachment face to cover opposite side faces of the battery cell, and a fourth attachment face extending from the first attachment face to cover the PCM mounted to the sealed surplus portion.

A protection circuit module is also disclosed and includes a protection circuit board having a cathode terminal connection part and an anode terminal connection part connected to a cathode terminal and an anode terminal of a battery cell, respectively, and a first case and a second case each having an open face, the first case and the second case being coupled to each other so that the open faces of the first case and the second case are opposite to each other, the board being disposed in a space defined in the first case and the second case through the open faces.

In the disclosed protection circuit module, the protection circuit board may be disposed in the first case and the second case coupled to each other through an assembly type fastening structure in a state in which the protection circuit board is parallel to the battery cell, and may be mounted to a sealed surplus portion of the battery cell.

In the disclosed protection circuit module, the anode terminal connection part of the protection circuit module may be connected to the anode terminal of the battery cell via a safety element.

In the disclosed protection circuit module, the first case and/or the second case may include grooves, into which the electrode terminals of the battery cell are inserted, and a groove, in which an external input and output terminal is mounted in a state in which the external input and output terminal extends outside.

In the disclosed protection circuit module, the first case may be provided with at least one fastening groove for coupling with the second case, and the second case may be provided with at least one fastening protrusion corresponding to the at least one fastening groove of the first case.

In the disclosed protection circuit module , the at least one fastening groove and the at least one fastening protrusion corresponding to the at least one fastening groove may include one or more fastening grooves and one or more fastening protrusions formed at outer circumferences of the opposite faces of the first case and the second case.

In disclosed the protection circuit module, the first case or the second case is provided with an opening, through which a safety element located in the protection circuit module is exposed outside.

A method of manufacturing a secondary battery pack according to another embodiment of the present invention includes a step of forming a battery cell configured to have a structure in which an electrode assembly, including cathodes, anodes, and separators respectively disposed between the cathodes and the anodes, is disposed in a battery case in a sealed state, one of sealed outer circumferences of the battery cell having a surplus portion, a step of receiving a board into a space defined in a first case and a second case, each of which has an open face, the first case and the second case being coupled to each other so that the open faces of the first case and the second case are opposite to each other, through the open faces, and a step of mounting an assembly of the first case and the second case to the sealed surplus portion of the battery cell.

In the method of manufacturing the secondary battery pack according to this embodiment, the first case and the second case may be coupled to each other through an assembly type fastening structure in a state in which the open faces of the first case and the second case are opposite to each other.

A secondary battery pack according to a further embodiment is also discloses and includes a battery cell having a cathode terminal and an anode terminal formed at one face having a sealed surplus portion and a protection circuit module (PCM) electrically connected to the battery cell via the cathode terminal and the anode terminal.

In this further embodiment, the PCM may include a board having a cathode terminal connection part connected to the cathode terminal and a second safety element connection part connected to the anode terminal, and a first case and a second case each having an open face, the first case and the second case being coupled to each other so that the open faces of the first case and the second case are opposite to each other, the board being disposed in a space defined in the first case and the second case through the open faces.

In this further embodiment, the first case and the second case, in which the board is disposed, may be mounted to the sealed surplus portion of the battery cell.

### [ADVANTAGEOUS EFFECTS]

As is apparent from the above description, the secondary battery pack according to the present invention is configured so that the protection circuit board is disposed in the electrically insulative case. Consequently, it is possible to protect and insulate the protection circuit board. Also, it is possible to easily prevent the electrode terminals from being exposed outside without insulation of the electrode terminal through the use of additional members.

Also, the secondary battery pack according to the present invention is configured to have a structure in which the PCM, in which the protection circuit board is disposed in a single case, is mounted to the sealed surplus portion of the battery cell. Consequently, it is possible to effectively protect the PCM and to greatly improve manufacturing efficiency.

Furthermore, the secondary battery pack according to the present invention is configured to have a structure in which the protection circuit board is mounted in the case. Consequently, it is possible to easily manufacture the secondary battery pack, to relatively reduce a defect rate, and to configure the secondary battery pack so that the secondary battery pack has no wrinkles formed at the outer face thereof, i.e. a neat and clean external appearance.

In addition, the secondary battery pack according to the present invention is configured to have a structure in which the protection circuit board is mounted to one of the outer circumferences, e.g. one of the sealed portions, of the battery cell. Consequently, it is possible to reduce the length of the sealed portion and to increase the capacity of the secondary battery pack per unit volume.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is a partial perspective view of a battery cell;
FIG. 2 is a partial perspective view showing that a safety element is coupled to the battery cell;
FIG. 3 is a partial perspective view showing that an external input and output terminal is coupled to a protection circuit board (PCB);
FIG. 4 is a partial perspective view showing that the PCB and the safety element are coupled to the upper end of the battery cell;
FIG. 5 is a perspective view showing a first case and a second case;
FIG. 6 is a partial perspective view showing that the PCB and the safety element of FIG. 4 are mounted to the second case;
FIG. 7 is a partial perspective view showing that the PCB and the safety element of FIG. 4 are mounted to the first case and the second case;
FIG. 8 is a partial perspective view showing a state in which a protection circuit module (PCM) of FIG. 7 is mounted to a sealed surplus portion of the battery cell;
FIGS. 9 to 11 are typical views showing a label attachment process; and
FIG. 12 is a perspective view of a secondary battery pack according to another embodiment of the present invention.

### [DETAILED DESCRIPTION OF THE INVENTION]

Now, exemplary embodiments of the present invention will be described in detail with reference to the accompanying drawings. It should be noted, however, that the embodiments will be described only for a better understanding of the present invention, and therefore, the scope of the present invention is not limited by the illustrated embodiments.

A secondary battery pack according to an embodiment of the present invention includes a battery cell having four sealed outer circumferences and a safety element mounted to a sealed outer circumference having a surplus portion, which is one of the outer circumferences. A safety element according to an embodiment of the present invention may include a first safety element and a second safety element. The first safety element may be a protection circuit, and the second safety element may be a positive temperature coefficient (PTC) element, a fuse, or a thermal cutoff (TCO) element. Also, the second safety element may be mounted in a protection circuit module (PCM) in the form of a part.

The safety element according to the embodiment of the present invention may be a PCM. The PCM may include a protection circuit board and a case, in which the protection circuit board is disposed. For the convenience of description, a PCM will be described as being adopted as the safety element, and the PCM will be described as including a protection circuit board (PCB) in this specification, to which, however, the safety element according to the embodiment of the present invention is not limited.

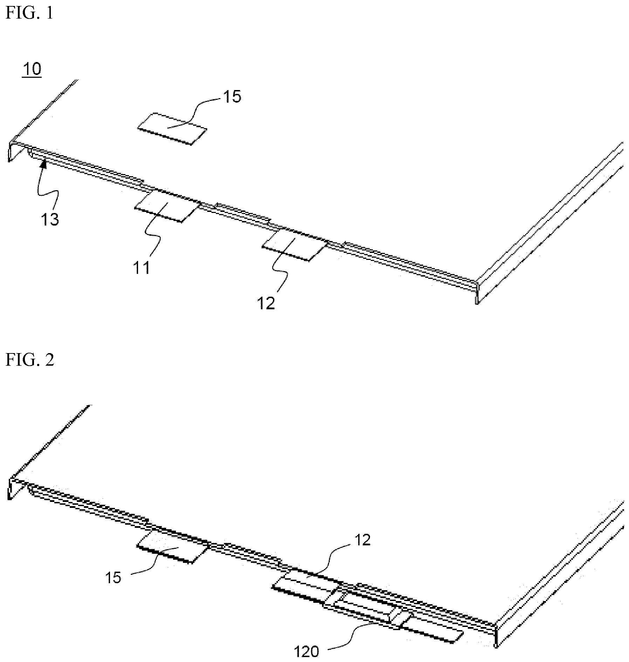

Hereinafter, a secondary battery pack according to an embodiment of the present invention will be described with reference to FIGS. 1 to 11.

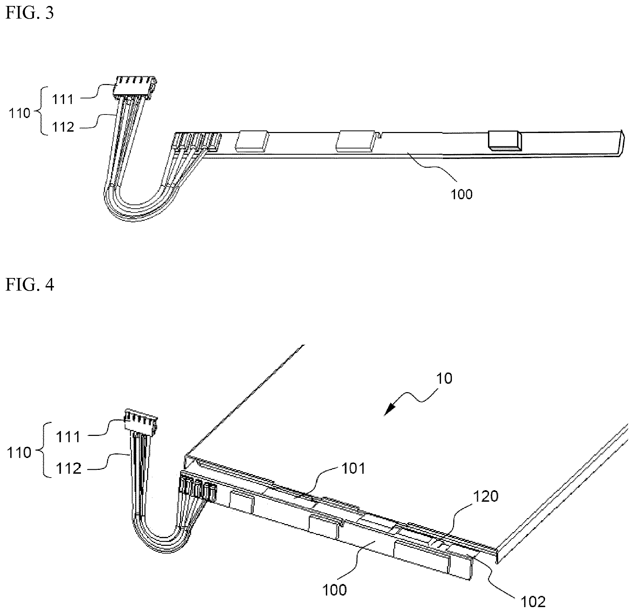

FIG. 1 is a partial perspective view of a battery cell, FIG. 2 is a partial perspective view showing that a safety element is coupled to the battery cell, FIG. 3 is a partial perspective view showing that an external input and output terminal is coupled to a protection circuit board (PCB), and FIG. 4 is a partial perspective view typically showing that the PCB and the safety element are coupled to the upper end of the battery cell.

Referring to these drawings, a battery cell 10 is a plate-shaped battery cell having an anode terminal 12 and a cathode terminal 11 formed at one end thereof

A battery cell 10 according to an embodiment of the present invention is a pouch-shaped battery cell configured so that an electrode assembly of a cathode/separator/anode structure is disposed in a battery case made of a laminate sheet including a metal layer and a resin layer in a sealed state, to which, however, the battery cell according to the embodiment of the present invention is not limited.

Referring to FIG. 1, the battery cell 10 includes a sealed surplus portion 13 formed at one face thereof and an anode terminal 12 and a cathode terminal 11 exposed to the sealed surplus portion 13. The term 'face' used in this specification indicates an arbitrary face of a tetrahedron with four faces, and is understood as including a side, a section, or an end. Also, in this specification, a sealed portion having a surplus space formed at one of the sealed outer circumferences formed when an electrode assembly is disposed in a battery case made of a laminate sheet in a sealed state is referred to as a sealed surplus portion 13. However, a person having ordinary skill in the art to which the present invention pertains will appreciate that the sealed surplus portion may be replaced by terms, such as a thermal welded surplus portion and a sealed terrace, as long as the specified terms have the same meaning as the sealed surplus portion.

Also, as shown in FIG. 1, the sealed surplus portion 13 may be formed by extending a sealed portion formed at one arbitrary face of the battery cell in a direction perpendicular to the lengthwise direction of the face.

As shown in FIGS. 1 to 4, a nickel plate 15 may be further mounted to one face of the cathode terminal 11 of the battery cell 10, to which a cathode terminal connection part 101 is coupled, by ultrasonic welding.

Meanwhile, an external input and output terminal 110 including an interconnection part 112, formed in the shape of a wire, having a conne ctor 111 mounted to one end thereof may be connected to one end of a PCB 100, and a cathode terminal connection part 101, which is made of a nickel plate, and a safety element connection part 102, which is made of a nickel plate, may be formed at positions corresponding to the cathode terminal 11 and a safety element 120.

The interconnection part 112 of the external input and output terminal 110 may be formed in various shapes, such as a plate, in addition to the wire. Also, in a case in which no safety element is added to the PCB, the PCB may include a cathode terminal connection part and an anode terminal connection part.

Also, a second safety element (for example, a PTC element, a fuse, or a TCO element) may be added to the cathode terminal 11.

As shown in FIG. 4, the cathode terminal connection part 101 and the safety element connection part 102, which are connected to the PCB 100, are bent.

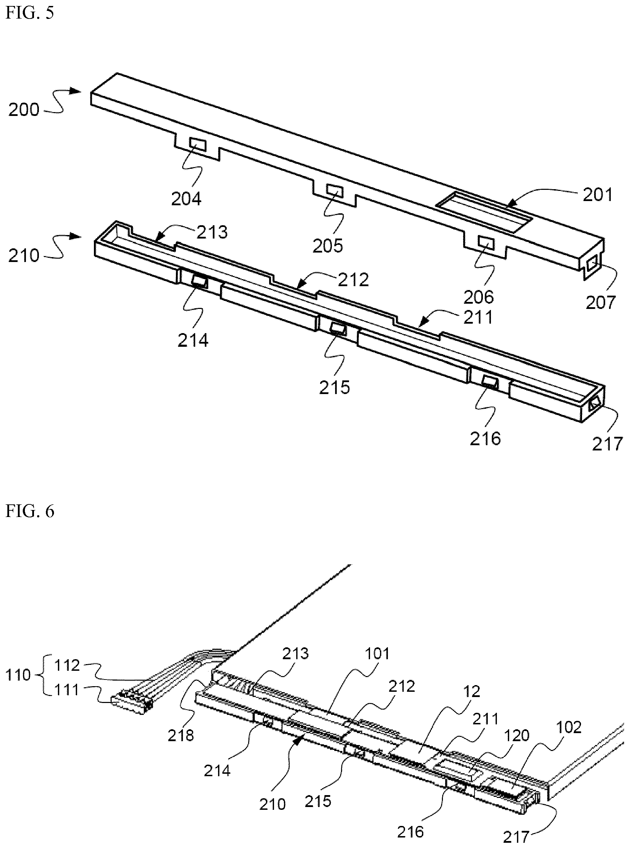

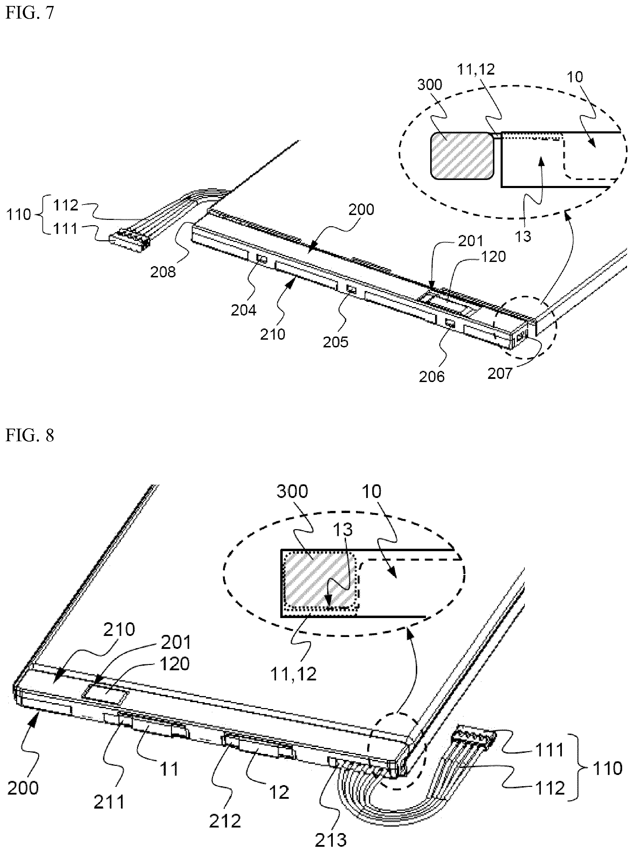

FIG. 5 is a perspective view showing a first case and a second case, FIG. 6 is a partial perspective view showing that the PCB and the safety element of FIG. 4 are mounted to the second case, FIG. 7 is a partial perspective view showing that the PCB and the safety element of FIG. 4 are mounted to the first case and the second case, and FIG. 8 is a partial perspective view showing a state in which a protection circuit module (PCM) of FIG. 7 is mounted to a sealed surplus portion of the battery cell.

Referring to these drawings, the secondary battery pack according to the embodiment of the present invention may include a first case 200 and a second case 210 coupled to each other in a state in which the first case 200 and the second case 210 surround the PCB 100 and the safety element 120.

As shown in FIG. 5, the second case 210 may be formed approximately in the shape of a box opened at one face thereof and having a length corresponding to that of one face of the battery cell at which the sealed surplus portion is formed. Alternatively, the length of the second case 210 may be greater or less than that of the sealed surplus portion. Also, the second case 210 may include grooves 211 and 212, into which the electrode terminals 11 and 12 of the battery cell are inserted, and a groove 213, in which the external input and output terminal 110 is mounted in a state in which the external input and output terminal 110 extends outside via the interconnection part 112, formed at one of the two faces opposite to each other in a state in which the open face is disposed between the two faces. Although not shown in FIG. 5 for simplicity of description, the grooves 211, 212, and 213 formed at the second case 210 may also be formed at the first case 200. Alternatively, the grooves 211, 212, and 213 may be formed at both the first case 200 and the second case 210.

The first case 200 has an open face and is configured to be coupled to the second case 210 so that the open face of the first case 200 is opposite to the open face of the second case 210. An opening 210, through which the safety element 120 is exposed outside, may be formed at a face of the first case 200 opposite to the open face thereof Although not shown in the drawing for simplicity of description, the opening may be formed at the second case 210. Alternatively, the opening may be formed at both the first case 200 and the second case 210. When the first case 200 is mounted to the sealed surplus portion, therefore, the total height of one face of the battery cell including the sealed surplus portion in a state in which the first case and the second case are mounted is not increased. Also, although the safety element 120 is surrounded by the first case 200 and the second case 210, it is possible for the safety element 120 to sensitively respond to the change of temperature of the battery cell 10 by the provision of the opening 201.

In the secondary battery pack according to the embodiment of the present invention, therefore, the electrode terminals 11 and 12 of the battery cell are inserted through the grooves 211 and 212, and the interconnection part 112 is drawn through the groove 213 so that the external input and output terminal 120 is exposed outside. Also, in a state in which the safety element 120 is exposed through the opening 201, the PCB 100 and the safety element 120 are mounted in the first case 200 and the second case 210 to constitute a PCM 300.

A first case 200 and a second case 210 according to an embodiment of the present invention may be coupled to each other through an assembly type fastening structure.

Specifically, as shown in FIGS. 5 to 7, the assembly type fastening structure is constituted by fastening protrusions 214, 215, 216, and 217 formed at the outer circumference of the second case 210 in the longitudinal direction or in the lateral direction and fastening grooves 204, 205, 206, and 207 formed at the outer circumference of the first case 200 in the longitudinal direction or in the lateral direction so that the fastening grooves 204, 205, 206, and 207 correspond to the fastening protrusions 214, 215, 216, and 217 (some of which are not shown). Also, the fastening protrusions may be formed at the inside of the second case 210 (toward the PCB) or at the outside of the second case 210. A person having ordinary skill in the art to which the present invention pertains will appreciate that the number or position of the fastening protrusions and the fastening grooves may be properly adjusted within a range in which the first case 200 and the second case 210 can be coupled to each other. Also, the assembly type fastening structure is not limited to the structure shown in FIG. 5 so long as the first case 200 and the second case 210 can be coupled to each other through the assembly type fastening structure. For example, a fastening structure using a latch and a hanger, a fastening structure using an adhesive material, or a forced fitting type fastening structure may be used as the assembly type fastening structure.

After the PCB 100 and the safety element 120 are mounted in the second case 210, therefore, the assembly of the first case 200 and the second case 210 may be achieved by coupling between the fastening protrusions 214, 215, 216, and 217 and the fastening grooves 204, 205, 206, and 207 without using additional members.

FIG. 8 is a view showing a state in which the secondary battery pack of FIG. 7 is turned over. As shown in FIG. 8, in the secondary battery pack according to the embodiment of the present invention, the PCM 300, including the PCB 100 and the safety element 120 disposed in the first case 200 and the second case 210, are mounted to the sealed surplus portion 13 of the battery cell 10 by bending the electrode terminals 11 and 12.

Consequently, the secondary battery pack according to the embodiment of the present invention is configured so that the PCM 300, in which the protection circuit board electrically connected to the cathode terminal and the anode terminal of the battery cell is disposed in the case, is mounted to the sealed surplus portion formed at one face of the battery cell. Consequently, it is possible to effectively protect the PCM and to greatly reduce the number of parts constituting the secondary battery pack, thereby greatly improving manufacturing efficiency, as compared with the conventional secondary battery pack.

Also, the secondary battery pack according to the present invention is configured so that the protection circuit board is disposed in the electrically insulative case. Consequently, it is possible to protect and insulate the PCM including the protection circuit board. Also, it is possible to easily prevent the electrode terminals from being exposed outside without insulation of the electrode terminals through the use of additional members.

Furthermore, the secondary battery pack according to the present invention is configured so that the protection circuit board is mounted in the case. Consequently, it is possible to easily manufacture the secondary battery pack, to relatively reduce a defect rate, and to configure the secondary battery pack so that the secondary battery pack has no wrinkles formed at the outer face thereof, i.e. a neat and clean external appearance, as compared with the conventional secondary battery pack in which the PCM is insulated using a tape.

In addition, the secondary battery pack according to the present invention is configured so that the protection circuit board is mounted to the sealed surplus portion formed at one face of the battery cell. Consequently, it is possible to reduce the length of the sealed surplus portion and to increase the capacity of the battery pack per unit volume, as compared with the conventional secondary battery pack.

Meanwhile, in a general process of assembling the secondary battery pack, the connection members and the PCM are coupled, and an insulative tape is attached at each step, to the PCM assembly is mounted to the battery cell, as previously described. That is, the PCM assembly is mounted to the battery cell using a plurality of parts with the result that a plurality of processes is required, and structural stability as well as mechanical strength is low.

On the other hand, the protection circuit module according to the present invention is configured to have a structure in which the protection circuit board is mounted in the case, and therefore, it is possible to improve structural stability of the battery pack, to greatly simplify the process of manufacturing the battery pack, to secure excellent insulativity, and to maximize the capacity of the battery cell in the battery pack having the same standard as the conventional battery pack.

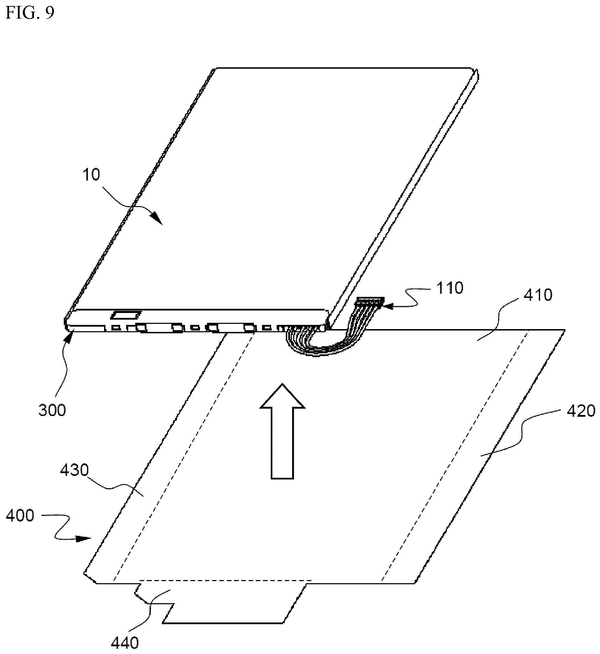

FIGS. 9 to 11 are views typically showing a process of attaching a label to the battery cell manufactured as shown in FIG. 8.

Referring to these drawings, a label 400 may be configured to have a sheet structure including a first attachment face 410 to cover the bottom of the battery cell 10, second and third attachment faces 420 and 430 extending from the first attachment face 410 to cover opposite side faces of the battery cell 10, and a fourth attachment face 440 extending from the first attachment face 410 to cover the PCM 300 and to cover one face of the battery cell at which the sealed surplus portion is formed.

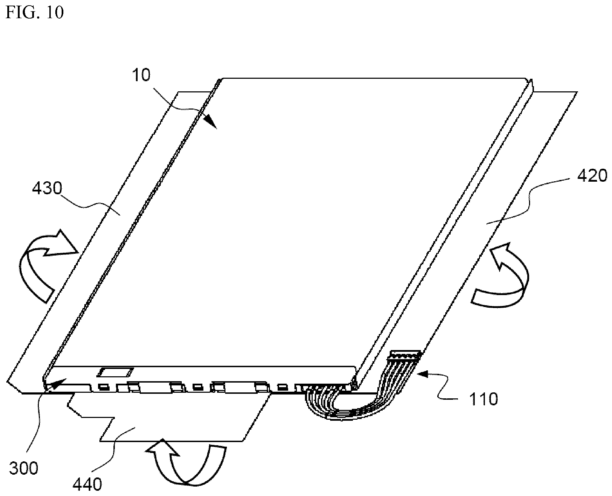

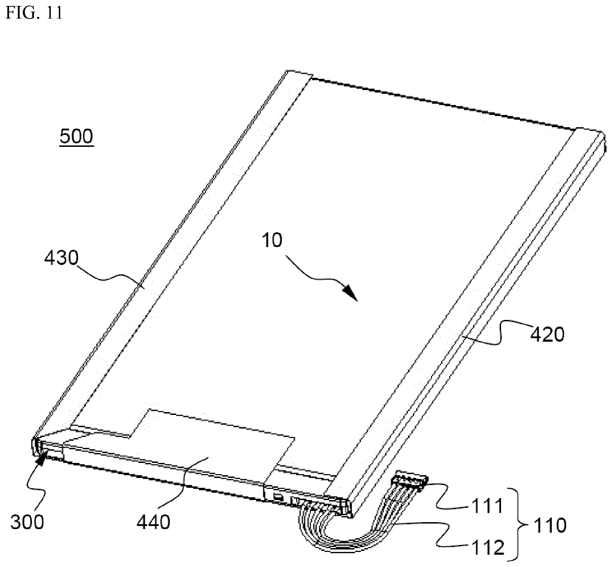

Consequently, the bottom of the battery cell 10 is placed on the first attachment face 410, the second and third attachment faces 420 and 430 are bent and attached to the opposite side faces of the battery cell 10 so as to cover the opposite side faces of the battery cell 10, and the fourth attachment face 440 is bent and attached to the PCM so as to cover the PCM. In this way, the label 400 may be attached to the battery cell 10. FIG. 11 is a view showing a secondary battery pack 500 in which the label 400 is attached to the battery cell 10 (see arrow directions in FIG. 10).

The label 400, showing product information, more stably secures the electrical connection state between the electrode terminals of the battery cell and the PCB while maintaining the insulation state at the opposite side faces of the battery cell 10 as well as the outer face of the battery cell 10.

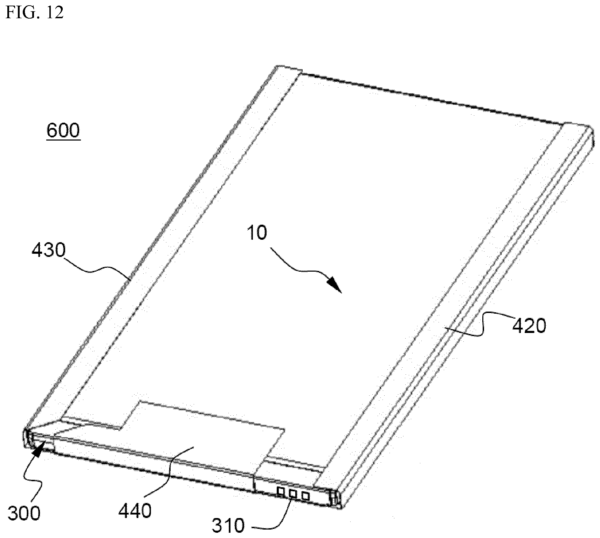

FIG. 12 is a perspective view of a secondary battery pack according to another embodiment of the present invention configured so that an external input and output terminal is mounted to a PCB. Referring to FIG. 12 together with FIG. 5, a secondary battery pack 600 is configured to have a structure in which an external connection terminal 310 is formed at one face of the PCB (not shown) so that the external connection terminal 310 is exposed outside through a PCM case 300. Specifically, an opening, through which the external connection terminal 310 is exposed, may be formed at one face of one of the case 200 and 210 constituting the PCM case 300, i.e. the second case 210.

## Claims

1. A secondary battery pack comprising:
a battery cell having a cathode terminal and an anode terminal formed at one face having a sealed surplus portion; and
a protection circuit module (PCM) electrically connected to the battery cell via the cathode terminal and the anode terminal, wherein
the PCM comprises:
a board having a cathode terminal connection part connected to the cathode terminal and an anode terminal connection part connected to the anode terminal; and
a first case and a second case each having an open face, the first case and the second case being coupled to each other so that the open faces of the first case and the second case are opposite to each other, the board being disposed in a space defined in the first case and the second case through the open faces, and
the first case and the second case, in which the board is disposed, are mounted to the sealed surplus portion of the battery cell by bending the electrode terminals, wherein the anode terminal connection part of the PCM is connected to the anode terminal of the battery cell via a safety element.
wherein the first case or the second case is provided with an opening, through which the safety element located in the PCM is exposed outside.

2. The secondary battery pack according to claim 1, wherein the first case and the second case are coupled to each other through an assembly type fastening structure in a state in which the open faces of the first case and the second case are opposite to each other.

3. The secondary battery pack according to claim 1, wherein the safety element is a first safety element or a second safety element.

4. The secondary battery pack according to claim 3, wherein the first safety element is a protection circuit.

5. The secondary battery pack according to claim 3, wherein the second safety element is a positive temperature coefficient (PTC) element, a fuse, or a thermal cutoff (TCO) element.

6. The secondary battery pack according to claim 1, wherein the first case is provided with at least one fastening groove or fastening protrusion for coupling with the second case, and the second case is provided with at least one fastening protrusion or fastening groove corresponding to the at least one fastening groove or fastening protrusion of the first case.

7. The secondary battery pack according to claim 6, wherein the at least one fastening groove and the at least one fastening protrusion corresponding to the at least one fastening groove comprise one or more fastening grooves and one or more fastening protrusions formed at outer circumferences of the opposite faces of the first case and the second case.

8. The secondary battery pack according to claim 1, wherein the battery cell is a plate-shaped battery cell, and the anode terminal and the cathode terminal are plate-shaped conductive members.

9. The secondary battery pack according to claim 1, wherein the board further comprises an external input and output terminal.

10. The secondary battery pack according to claim 9, wherein the external input and output terminal is formed on the board at which the anode terminal connection part and the cathode terminal connection part are formed.

11. The secondary battery pack according to claim 9, wherein the external input and output terminal is formed at the other face of the board at which the anode terminal connection part and the cathode terminal connection part are formed.

12. The secondary battery pack according to claim 9, wherein the external input and output terminal is formed at the board at which the anode terminal connection part and the cathode terminal connection part are formed via an interconnection part.

13. The secondary battery pack according to claim 12, wherein the first case and/or the second case comprises grooves, into which the electrode terminals of the battery cell are inserted, and a groove, in which the external input and output terminal is mounted in a state in which the external input and output terminal extends outside.

14. The secondary battery pack according to claim 1, further comprising an insulative tape additionally attached to at least one of outer faces of the first case and/or the second case.

15. The secondary battery pack according to claim 1, wherein the battery cell is configured to have a structure in which an electrode assembly, comprising cathodes, anodes, and separators respectively disposed between the cathodes and the anodes, is disposed in a battery case made of a laminate sheet comprising a metal layer and a resin layer in a sealed state.

16. The secondary battery pack according to claim 1, further comprising a nickel plate additionally mounted to the cathode terminal connection part and/or the anode terminal connection part of the board by ultrasonic welding.

17. The secondary battery pack according to claim 1, further comprising a label to cover the battery cell.

18. The secondary battery pack according to claim 17, wherein the label is configured to have a structure to cover sealed outer circumferences of the battery cell and the PCM.

19. The secondary battery pack according to claim 18, wherein the label is configured to have a sheet structure comprising a first attachment face to cover a bottom, which is one of opposite major faces, of the battery cell, second and third attachment faces extending from the first attachment face to cover opposite side faces of the battery cell, and a fourth attachment face extending from the first attachment face to cover the PCM mounted to the sealed surplus portion.

20. A method of manufacturing the secondary battery pack according to claim 1 comprising:
a step of forming a battery cell configured to have a structure in which an electrode assembly, comprising cathodes, anodes, and separators respectively disposed between the cathodes and the anodes, is disposed in a battery case in a sealed state, one of sealed outer circumferences of the battery cell having a surplus portion;
a step of receiving a board into a space defined in a first case and a second case, each of which has an open face, the first case and the second case being coupled to each other so that the open faces of the first case and the second case are opposite to each other, through the open faces; and
a step of mounting an assembly of the first case and the second case to the sealed surplus portion of the battery cell.

## Patentansprüche

1. Sekundärbatteriepack, mit:
einer Batteriezelle mit einem Kathodenanschluss und einem Anodenanschluss, die an einer Fläche mit einem abgedichteten Überschussabschnitt ausgebildet sind; und
einem Schutzschaltungsmodul (PCM), das mit der Batteriezelle über den Kathodenanschluss und den Anodenanschluss elektrisch verbunden ist, wobei
das PCM aufweist:
eine Platte mit einem Kathodenanschluss-Verbindungsteil, der mit dem Kathodenanschluss verbunden ist, und einem Anodenanschluss-Verbindungsteil, der mit dem Anodenanschluss verbunden ist; und
ein erstes Gehäuse und ein zweites Gehäuse, jedes mit einer offenen Fläche, wobei das erste Gehäuse und das zweite Gehäuse aneinander gekoppelt sind, so dass die offenen Flächen des ersten Gehäuses und des zweiten Gehäuses einander gegenüberliegen, wobei die Platte in einem in dem ersten Gehäuse und dem zweiten Gehäuse definierten Raum durch die offenen Flächen angeordnet ist, und
wobei das erste Gehäuse und das zweite Gehäuse, in welchen die Platte angeordnet ist, an dem abgedichteten Überschussabschnitt der Batteriezelle durch Biegen der Elektrodenanschlüsse montiert sind,
wobei der Anodenanschluss-Verbindungsteil des PCM mit dem Anodenanschluss der Batteriezelle über ein Sicherheitselement verbunden ist,
wobei das erste Gehäuse oder das zweite Gehäuse mit einer Öffnung versehen ist, durch welche das in dem PCM befindliche Sicherheitselement nach außen freigelegt ist.

2. Sekundärbatteriepack nach Anspruch 1, wobei das erste Gehäuse und das zweite Gehäuse durch eine Befestigungsstruktur des Anordnungstyps in einem Zustand aneinander gekoppelt sind, in welchem die offenen Flächen des ersten Gehäuses und des zweiten Gehäuses einander gegenüberliegen.

3. Sekundärbatteriepack nach Anspruch 1, wobei das Sicherheitselement ein erstes Sicherheitselement oder ein zweites Sicherheitselement ist.

4. Sekundärbatteriepack nach Anspruch 3, wobei das erste Sicherheitselement eine Schutzschaltung ist.

5. Sekundärbatteriepack nach Anspruch 3, wobei das zweite Sicherheitselement ein Positiver-Temperaturkoeffizient(PTC)-Element, eine Sicherung oder ein Thermischer-Unterbrecher(TCO)-Element ist.

6. Sekundärbatteriepack nach Anspruch 1, wobei das erste Gehäuse mit zumindest einer Befestigungsnut oder Befestigungsvorsprung zum Koppeln mit dem zweiten Gehäuse versehen ist, und das zweite Gehäuse mit zumindest einem Befestigungsvorsprung oder Befestigungsnut, entsprechend der zumindest einen Befestigungsnut oder Befestigungsvorsprung des ersten Gehäuses, versehen ist.

7. Sekundärbatteriepack nach Anspruch 6, wobei die zumindest eine Befestigungsnut und der zumindest eine Befestigungsvorsprung, welcher der zumindest einen Befestigungsnut entspricht, eine oder mehr Befestigungsnuten und einen oder mehr Befestigungsvorsprünge aufweisen, die an Außenumfängen der gegenüberliegenden Flächen des ersten Gehäuses und des zweiten Gehäuses ausgebildet sind.

8. Sekundärbatteriepack nach Anspruch 1, wobei die Batteriezelle eine plattenförmige Batteriezelle ist, und der Anodenanschluss und der Kathodenanschluss plattenförmige leitfähige Elemente sind.

9. Sekundärbatteriepack nach Anspruch 1, wobei die Platte ferner einen externen Eingangs- und Ausgangsanschluss umfasst.

10. Sekundärbatteriepack nach Anspruch 9, wobei der externe Eingangs- und Ausgangsanschluss an der Platte ausgebildet ist, an welcher der Anodenanschluss-Verbindungsteil und der Kathodenanschluss-Verbindungsteil ausgebildet sind.

11. Sekundärbatteriepack nach Anspruch 9, wobei der externe Eingangs- und Ausgangsanschluss an der anderen Fläche der Platte ausgebildet ist, an welcher der Anodenanschluss-Verbindungsteil und der Kathodenanschluss-Verbindungsteil ausgebildet sind.

12. Sekundärbatteriepack nach Anspruch 9, wobei der externe Eingangs- und Ausgangsanschluss über einen Zusammenschaltungsteil an der Platte ausgebildet ist, an welcher der Anodenanschluss-Verbindungsteil und der Kathodenanschluss-Verbindungsteil ausgebildet sind.

13. Sekundärbatteriepack nach Anspruch 12, wobei das erste Gehäuse und/oder das zweite Gehäuse Nuten aufweist, in welche die Elektrodenanschlüsse der Batteriezelle eingeführt sind, und eine Nut, in welcher der externe Eingangs- und Ausgangsanschluss in einem Zustand montiert ist, in welchem sich der externe Eingangs- und Ausgangsanschluss nach außen erstreckt.

14. Sekundärbatteriepack nach Anspruch 1, ferner mit einem Isolierband, das zusätzlich an zumindest einer von Außenflächen des ersten Gehäuses und/oder des zweiten Gehäuses angebracht ist.

15. Sekundärbatteriepack nach Anspruch 1, wobei die Batteriezelle ausgestaltet ist, um eine Struktur aufzuweisen, bei welcher eine Elektrodenanordnung, die Kathoden, Anoden und entsprechend zwischen den Kathoden und den Anoden angeordnete Separatoren aufweist, in einem abgedichteten Zustand in einem Batteriegehäuse angeordnet ist, das aus einem Laminatbogen mit einer Metallschicht und einer Harzschicht hergestellt ist.

16. Sekundärbatteriepack nach Anspruch 1, ferner mit einer Nickelplatte, die zusätzlich an dem Kathodenanschluss-Verbindungsteil und/oder dem Anodenanschluss-Verbindungsteil der Platte durch Ultraschallschweißen montiert ist.

17. Sekundärbatteriepack nach Anspruch 1, ferner mit einem Etikett, um die Batteriezelle zu bedecken.

18. Sekundärbatteriepack nach Anspruch 17, wobei das Etikett ausgestaltet ist, um eine Struktur aufzuweisen, um abgedichtete Außenumfänge der Batteriezelle und des PCM zu bedecken.

19. Sekundärbatteriepack nach Anspruch 18, wobei das Etikett ausgestaltet ist, um eine Bogenstruktur aufzuweisen, mit einer ersten Anbringungsfläche, um einen Boden, welcher eine von gegenüberliegenden Hauptflächen ist, der Batteriezelle zu bedecken, zweiten und dritten Anbringungsflächen, die sich von der ersten Anbringungsfläche erstrecken, um gegenüberliegende Seitenflächen der Batteriezelle zu bedecken, und einer vierten Anbringungsfläche, die sich von der ersten Anbringungsfläche erstreckt, um das PCM zu bedecken, das an dem abgedichteten Überschussabschnitt montiert ist.

20. Verfahren zur Herstellung eines Sekundärbatteriepacks nach Anspruch 1, umfassend:
einen Schritt des Ausbildens einer Batteriezelle, die ausgestaltet ist, um eine Struktur aufzuweisen, bei welcher eine Elektrodenanordnung, die Kathoden, Anoden und entsprechend zwischen den Kathoden und den Anoden angeordnete Separatoren umfasst, in einem abgedichteten Zustand in einem Batteriegehäuse angeordnet wird, wobei einer von abgedichteten Außenumfängen der Batteriezelle einen Überschussabschnitt aufweist;
einen Schritt des Aufnehmens einer Platte in einen Raum, der in einem ersten Gehäuse und einem zweiten Gehäuse definiert ist, von welchen jedes eine offene Fläche aufweist, wobei das erste Gehäuse und das zweite Gehäuse aneinander gekoppelt sind, so dass die offenen Flächen des ersten Gehäuses und des zweiten Gehäuses einander gegenüberliegen, durch die offenen Flächen; und
einen Schritt des Montierens einer Anordnung des ersten Gehäuses und des zweiten Gehäuses an dem abgedichteten Überschussabschnitt der Batteriezelle.

## Revendications

1. Bloc de batterie secondaire comprenant :
une cellule de batterie ayant une borne de cathode et une borne d'anode formée sur une face ayant une partie en surplus scellée ; et
un module de circuit de protection (PCM) électriquement connecté à la cellule de batterie via la borne de cathode et via la borne d'anode, dans lequel le PCM comprend :
une carte ayant une pièce de connexion de borne de cathode connectée à la borne de cathode et une pièce de connexion de borne d'anode connectée à la borne d'anode ;
et
un premier boîtier et un second boîtier ayant chacun une face ouverte, le premier boîtier et le second boîtier étant couplés l'un à l'autre de sorte que les faces ouvertes du premier boîtier et du second boîtier sont en regard l'une de l'autre, la carte étant disposée dans un espace défini dans le premier boîtier et dans le second boîtier à travers les faces ouvertes, et
le premier boîtier et le second boîtier, dans lesquels la carte est disposée, sont montés sur la partie en surplus scellée de la cellule de batterie par cintrage des bornes d'électrode, dans lequel la pièce de connexion de borne d'anode du PCM est connectée à la borne d'anode de la cellule de batterie via un élément de sûreté.
dans lequel le premier boîtier ou le second boîtier est équipé d'une ouverture à travers laquelle l'élément de sûreté situé dans le PCM est à découvert.

2. Bloc de batterie secondaire selon la revendication 1, dans lequel le premier boîtier et le second boîtier sont couplés l'un à l'autre par le biais d'une structure de fixation de type assemblage dans un état dans lequel les faces ouvertes du premier boîtier et du second boîtier sont en regard l'une de l'autre.

3. Bloc de batterie secondaire selon la revendication 1, dans lequel l'élément de sûreté est un premier élément de sûreté ou un second élément de sûreté.

4. Bloc de batterie secondaire selon la revendication 3, dans lequel le premier élément de sûreté est un circuit de protection.

5. Bloc de batterie secondaire selon la revendication 3, dans lequel le second élément de sûreté est un élément PTC (élément à coefficient de température positif), un fusible ou un élément TCO (élément à coupure thermique).

6. Bloc de batterie secondaire selon la revendication 1, dans lequel le premier boîtier est équipé d'au moins une gorge de fixation ou d'une protubérance de fixation pour le couplage au second boîtier, et le second boîtier est équipé d'au moins une protubérance de fixation ou d'une gorge de fixation correspondant à l'au moins une gorge de fixation ou protubérance de fixation du premier boîtier.

7. Bloc de batterie secondaire selon la revendication 6, dans lequel l'au moins une gorge de fixation et l'au moins une protubérance de fixation correspondant à l'au moins une gorge de fixation comprennent une ou plusieurs gorges de fixation et une ou plusieurs protubérances de fixation formées sur des circonférences externes des faces en regard du premier boîtier et du second boîtier.

8. Bloc de batterie secondaire selon la revendication 1, dans lequel la cellule de batterie est une cellule de batterie en forme de plaque et la borne d'anode et la borne de cathode sont des éléments conducteurs en forme de plaque.

9. Bloc de batterie secondaire selon la revendication 1, dans lequel la carte comprend en outre une borne externe d'entrée et de sortie.

10. Bloc de batterie secondaire selon la revendication 9, dans lequel la borne externe d'entrée et de sortie est formée sur la carte sur laquelle la pièce de connexion de borne d'anode et la pièce de connexion de borne de cathode sont formées.

11. Bloc de batterie secondaire selon la revendication 9, dans lequel la borne externe d'entrée et de sortie est formée sur l'autre face de la carte sur laquelle la pièce de connexion de borne d'anode et la pièce de connexion de borne de cathode sont formées.

12. Bloc de batterie secondaire selon la revendication 9, dans lequel la borne externe d'entrée et de sortie est formée sur la carte sur laquelle la pièce de connexion de borne d'anode et la pièce de connexion de borne de cathode sont formées via une pièce d'interconnexion.

13. Bloc de batterie secondaire selon la revendication 12, dans lequel le premier boîtier et/ou le second boîtier comprennent des gorges, dans lesquelles les bornes d'électrode de la cellule de batterie sont insérées, et une gorge, dans laquelle la borne externe d'entrée et de sortie est montée dans un état dans lequel la borne externe d'entrée et de sortie s'étend vers l'extérieur.

14. Bloc de batterie secondaire selon la revendication 1, comprenant en outre un ruban isolant attaché en plus à au moins une des faces externes du premier boîtier et/ou du second boîtier.

15. Bloc de batterie secondaire selon la revendication 1, dans lequel la cellule de batterie est configurée pour avoir une structure dans laquelle un ensemble d'électrodes, comprenant des cathodes, des anodes et des séparateurs disposés respectivement entre les cathodes et les anodes, est disposé dans un boîtier de batterie fait d'une feuille stratifiée comprenant une couche de métal et une couche de résine dans un état scellé.

16. Bloc de batterie secondaire selon la revendication 1, comprenant en outre une plaque de nickel montée en plus sur la pièce de connexion de borne de cathode et/ou sur la pièce de connexion de borne d'anode de la carte par soudage aux ultrasons.

17. Bloc de batterie secondaire selon la revendication 1, comprenant en outre une étiquette pour recouvrir la cellule de batterie.

18. Bloc de batterie secondaire selon la revendication 17, dans lequel l'étiquette est configurée pour avoir une structure pour recouvrir des circonférences externes scellées de la cellule de batterie et du PCM.

19. Bloc de batterie secondaire selon la revendication 18, dans lequel l'étiquette est configurée pour avoir une structure de feuille comprenant une première face de fixation pour recouvrir un fond, qui est une des faces majeures opposées, de la cellule de batterie, des deuxième et troisième faces de fixation s'étendant depuis la première face de fixation pour recouvrir des faces latérales opposées de la cellule de batterie, et une quatrième face de fixation s'étendant depuis la première face de fixation pour recouvrir le PCM monté au niveau de la partie en surplus scellée.

20. Procédé de fabrication du bloc de batterie secondaire selon la revendication 1 comprenant :
une étape de formation d'une cellule de batterie configurée pour avoir une structure, dans laquelle un ensemble d'électrodes, comprenant des cathodes, des anodes et des séparateurs disposés respectivement entre les cathodes et les anodes, est disposé dans un boîtier de batterie dans un état scellé, une des circonférences externes scellées de la cellule de batterie ayant une partie en surplus ;
une étape de réception d'une carte dans un espace défini dans un premier boîtier et dans un second boîtier, dont chacun a une face ouverte, le premier boîtier et le second boîtier étant couplés l'un à l'autre de sorte que les faces ouvertes du premier boîtier et du second boîtier sont en regard l'une de l'autre, à travers les faces ouvertes ; et
une étape de montage d'un ensemble du premier boîtier et du second boîtier à la partie en surplus scellée de la cellule de batterie.
